# EUROPEAN PATENT APPLICATION

(11) **EP 3 070 115 A1**
(43) Date of publication of application: **21.09.2016**
(21) Application number: 15159917.2
(22) Date of filing: 19.03.2015
(51) Int. Cl.: C08J 3/20, C08F 283/00, C08K 3/00, C08K 5/01, C08L 63/00, H01B 13/14, H01B 3/28, H01B 3/40, H01B 7/282

(54) **Epoxy resin composition with improved dielectric breakdown strength**

(71) Applicant: ABB Research Ltd., 8050 Zürich (CH)
(72) Inventor: Meier, Patrick, 5603 Staufen (CH); Ho, Chau-Hon, 4332 Stein (CH); Scheel, Saskia, 5600 Lenzburg (CH); Tzavalas, Spiros, 5426 Lengnau (CH)
(74) Representative: Zimmermann & Partner Patentanwälte mbB

(57) **Abstract**

The present invention relates to an epoxy resin composition for use as insulator, comprising an epoxy compound and at least one breakdown inhibiting agent, and to a method for producing the same. Moreover, the present invention is also directed to the use of at least one breakdown inhibiting agent for increasing the breakdown strength of an insulator comprising an epoxy resin composition and to the use of the epoxy resin composition for impregnating electrical coils and in the production of electrical components, preferably transformers, bushings, insulators, switches, sensors, converters and cable end seals. Further, the present invention refers to an insulation material for electrical articles and to an electrical article comprising the epoxy resin composition.

## Description

### FIELD OF INVENTION

The present invention relates to an epoxy resin composition for use as insulator, comprising an epoxy compound and at least one breakdown inhibiting agent, and to a method for producing the same. The present invention is also directed to the use of at least one breakdown inhibiting agent for increasing the breakdown strength of an insulator comprising an epoxy resin composition, and to the use of the epoxy resin composition for impregnating electrical coils as well as in the production of electrical components, preferably transformers, bushings, insulators, switches, sensors, converters and cable end seals. Moreover, the present invention refers to an insulation material for electrical articles and to an electrical article comprising the epoxy resin composition.

### STATE OF THE ART

One of the key properties to be evaluated for electrical insulation materials is their dielectric breakdown strength. The dielectric breakdown strength of an insulation material is defined as the maximum electric field that a pure material can withstand under ideal conditions without experiencing failure of its insulating properties (i.e. without breaking down). Thus, in principle, the higher the breakdown strength, the more reliable the electrical insulation material is.

Typically, breakdown occurs quite abruptly (in nanoseconds), resulting in the formation of an electrically conductive path and a disruptive discharge through the material. For solid materials, a breakdown event severely degrades, or even destroys, its insulating capability.

In principle, the mechanism behind dielectric breakdown of a material such as a polymer is as follows: At breakdown, the applied electric field frees bound electrons. If the electric field is sufficiently high, such free electrons may become accelerated within the free volume of the polymer (equals to free path length for an electron). If such an accelerated free electron gains sufficient energy within the available free path length, it collides with atoms or molecules. This is accompanied with further ionizations (liberation of additional electrons) leading to an avalanche like-decomposition process, which finally result in the electrical breakdown. Electrons with enough kinetic energy to ionize the polymer chains are called "hot electrons".

In the past, several polymeric insulation materials were developed and their dielectric breakdown characteristics studied. In particular, it was found out that impurities and voids can contribute to early dielectric breakdown of the material. Hence, big efforts have been made to have a high purity level of the raw components and to optimize the processing parameters for a nearly void free production.

Nowadays, in epoxies, the breakdown strength is improved by adding inorganic nano fillers. For instance, WO 2011/095208 A1 suggests the use of a nano-scale sized filler material produced by a sol-gel process together with a micro-scale sized filler material in an epoxy resin composition to improve the dielectric breakdown strength thereof. This beneficial effect is most likely owed to the good dispersion of the nanosized filler material produced by a sol-gel process in the cured epoxy resin composition.

Even though such improvements are undoubted, the industrial use of this "nanosized filler" concept is hardly applied since the proper dispersion of the nanoparticles in industrial scale is demanding and the price of nanoparticles containing master batches is fairly high.

In view of the above, there is a need for a curable epoxy resin composition having improved electrical breakdown strength without using (nano) filler particles.

### BRIEF DESCRIPTION OF THE INVENTION

As a result of intensive studies conducted taking the above described problems into consideration, the present inventors were surprised to find that by combining a breakdown inhibiting agent with an epoxy compound, an epoxy resin composition is provided which exhibits high dielectric breakdown strength and which is usable as insulator, particularly for impregnating electrical coils, and in the production of electrical components, such as transformers, bushings, insulators, switches, sensors, converters and cable end seals.

The addition of such breakdown inhibiting agent(s) is significantly improving the electrical properties of the epoxy resin composition, especially its dielectric breakdown strength. A curable electrical epoxy resin composition containing about 0.5 wt% to 8 wt% of at least one breakdown inhibiting agent, such as e.g. 4,4'-Thiodiphenol dissolved in about 30 wt% to 80 wt% of epoxy compound yields a cured electrical epoxy resin composition with an improved dielectric breakdown strength by up to 32% compared to the cured electrical epoxy resin composition having no breakdown inhibiting agent. This is highly beneficial for the development of more robust insulation systems.

This advantageous increase in dielectric breakdown strength is owed to the fact that the breakdown inhibiting agents are dissolved (instead of being merely dispersed) in the epoxy compound (epoxy resin composition). This avoids the problems generally coming along with (real) dispersions, such as agglomerate formation or sedimentation. Also, there is no detrimental influence on the viscosity of the final epoxy resin composition upon dissolution of the breakdown inhibiting agents.

The dissolution of the breakdown inhibiting agents in the epoxy compound results in a highly homogeneous curable mixture between both compounds. This is attributed to the general physical principle that in a solution, a solute distributes as single atoms, ions or molecules in the solvent. In other words, the solute (i.e. the breakdown inhibiting agent) is molecularly dispersed in the solvent (i.e. the epoxy compound). Or expressed differently: There is no phase separation between the breakdown inhibiting agents and the curable epoxy compound. Upon curing, the molecular dispersion of single breakdown inhibiting agent molecules in the epoxy compound leads to a highly homogeneous matrix in the final (cured) epoxy resin composition. By contrast, in (real) dispersions such as suspensions, the dispersed phase is distributed in form of atom, ion or molecule aggregates (such as crystals) in the dispersant. Such an aggregate distribution apparently does not result in a comparably high degree of homogeneity as this is the case for molecular dispersions.

A high degree of matrix homogeneity improves the reliability of electrical articles made of the cured epoxy resin compositions having breakdown inhibiting agents dissolved therein. This enables the production of smaller designs of electrical articles or higher production ratings due to a higher design field strength in the insulation material. This also means that the cured epoxy resin composition shows improved robustness against impurities and voids. Moreover, since the breakdown inhibiting agents are dissolved and thus are easily miscible with the epoxy resin composition, air contamination is avoided so that environmental health and safety is improved. Above all, breakdown inhibiting agents are more cost effective and better commercially available compared to many pre-dispersed nano-scale filler products.

By contrast, using insoluble (nano-scale sized) fillers for improving the breakdown strength in epoxy compounds provides the difficulty that these fillers have to be uniformly dispersed within the epoxy matrix in order to avoid the formation of voids and concentration gradients within the matrix leading to early dielectric breakdown of the cured material. A time-consuming and cost-intensive mixing process is the consequence together with an increased safety and health risk due to a possible air contamination caused by these fillers. Using insoluble fillers may also negatively influence the viscosity of the final epoxy resin composition leading to severe processing difficulties. Moreover, in spite of highly sophisticated mixing processes, there is still a significant risk of the formation of filler agglomerates within the epoxy matrix resulting in undesired concentration gradients and finally in early dielectric breakdown. This is particular true when nano fillers are not stored properly, or stored for a long time.

The present invention is defined in the claims. The present invention refers to an epoxy resin composition comprising
- an epoxy compound, and
- at least one breakdown inhibiting agent.

The present invention also refers to a method for producing an epoxy resin composition, comprising the step of dissolving at least one breakdown inhibiting agent optionally together with one or more additives in an epoxy compound.

The present invention further refers to the use of at least one breakdown inhibiting agent for increasing the breakdown strength of an insulator comprising an epoxy resin composition.

The present invention further refers to the use of the epoxy resin composition for impregnating electrical coils and in the production of electrical components, preferably transformers, bushings, insulators, switches, sensors, converters and cable end seals.

The present invention further refers to an insulation material for electrical articles and to an electrical article comprising the epoxy resin composition.

Further embodiments, aspects, advantages and features of the present invention are described in the dependent claims, the description and the accompanying drawings.

In the following, if not otherwise defined, "wt%" (% by weight) refers to the total weight of the respective entity (e.g. the total weight of the epoxy resin composition). Furthermore, if not otherwise stated, all measurements were carried out at room temperature.

### BRIEF DESCRIPTION OF THE DRAWINGS

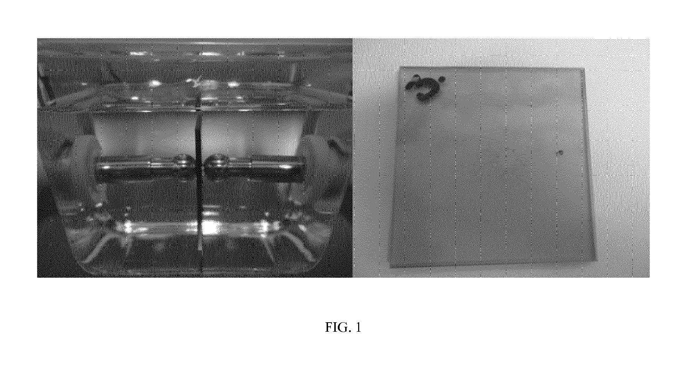

The details will be described in the following with reference to FIG. 1.
**FIG. 1****:** Left: Baur Oil Tester DTA 100 C setup. Right: Sample after electrical breakdown measurement, field lines and an electrical breakdown is clearly seen in the sample.

### DETAILED DESCRIPTION OF THE INVENTION

Reference will now be made in detail to various embodiments and aspects of the invention. Each embodiment and each aspect is provided by way of explanation and is not meant as a limitation. For example, features illustrated or described as part of one embodiment or aspect can be used on or in conjunction with any other embodiment or aspect to yield yet a further embodiment or aspect. It is intended that the present disclosure includes any such combinations and variations.

According to an embodiment, the invention relates to an epoxy resin composition comprising
- an epoxy compound, and
- at least one breakdown inhibiting agent.

For the purpose of this application, the "epoxy resin composition" refers both to the curable epoxy resin composition (i.e. to the epoxy resin composition before curing) and to the final epoxy resin composition (i.e. to the epoxy resin composition after curing).

According to an aspect, the epoxy resin composition (after curing) has an dielectric breakdown strength (AC) of higher than 30 kV/mm, preferably higher than 32 kV/mm more preferably higher than 35 kV/mm. In this respect, dielectric breakdown refers to a rapid reduction in the resistance of an electrical insulator that can lead to a spark jumping around or through the insulator. The dielectric breakdown strength (AC) is determined at room temperature with spherical electrodes (diameter 20mm) and a ramp speed of 2 kV/s.

Particular parameters used during the measurements of the dielectric breakdown strength can be seen in Table 1 in the Examples. More specifically, the electrical breakdown strength (AC) is determined with a Baur Oil Tester DTA 100 C. It is an AC test set-up, originally designed for electrical testing of transformer oils. In the present case, it served for testing of insulation materials.

The following procedure was performed during measurements of electrical breakdown strength. Prior to using the oil for the electrical breakdown measurements, the oil was degassed at 60 °C at 1 - 4 mbar overnight. Approximately 400 ml of oil is needed to fill the sample containing vessel. The sample was immersed into the oil containing glass vessel of the device and clamped between the electrodes by moving the electrodes slowly together, applying just enough force to keep the sample in place, see FIG. 1. The first measurement was performed five minutes after filling the vessel with oil and one minute after placing the sample in the device. The sample was removed immediately after breakdown, and a new sample was inserted. In between consecutive measurements two minutes was allowed to pass. The available magnetic stirring was not used during the measurements.

According to an aspect, the epoxy resin composition (which preferably is in a cured state) shows no phase separation occurrence determined via visual inspection, polarized microscopy, atomic force microscopy (AFM) and scanning electron microscopy (SEM) or a combination of one or more of these techniques. For the purpose of this application, phase separation occurrence determined via the above-mentioned techniques is understood to be the separation of two or more distinct phases which are present in a mixture observed at the nano and the micro-scale. In this respect, a phase is a region of space within a mixture which can be considered as essentially uniform with regard to its physical properties. More specifically, no separation in different domains, e.g. breakdown inhibiting agent domain and epoxy compound domain is observed within a phase. An observation at micro-scale is understood to be obtained from an analytical technique (such as visual inspection, polarized microscopy, atomic force microscopy (AFM) and scanning electron microscopy (SEM)) which analyzes the structure of a material (such as the epoxy resin composition) in a scale above 500 nm, e.g. from 500 nm to 50 µm. Applying the above-mentioned techniques shows that the epoxy resin composition exhibits only one single phase throughout the whole epoxy resin composition at the micro-scale.

Epoxy compounds used within the context of the present invention are aromatic and/or cycloaliphatic compounds having at least one epoxy group (i.e. oxiranes). Preferably, these epoxy compounds are reactive glycidyl compounds containing at least two 1,2-epoxy groups per molecule. Other suitable compounds comprise polyglycidyl compounds such as a mixture of diglycidyl- and triglycidyl compounds.

Epoxy compounds useful for the present invention comprise unsubstituted glycidyl groups and/or glycidyl groups substituted with methyl groups. The epoxy value (equiv./100 g) is preferably at least two, preferably at least four and especially at about five, preferably about 2.5 to about 6.5, more preferably about 3.5 to about 6.0, most preferably about 4.5 to 5.5. Preferred are glycidyl compounds which have glycidyl ether- and/or glycidyl ester groups. Such a compound may also contain both kinds of glycidyl groups, e.g. 4-glycidyloxy-benzoic acidglycidyl ester. Examples of preferred glycidyl compounds which have glycidyl ether groups are for example optionally substituted epoxy compounds of formula (I): 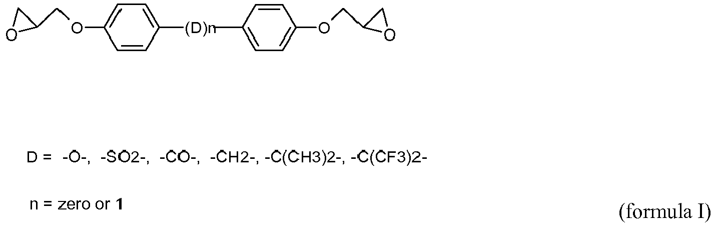 or formula (II):

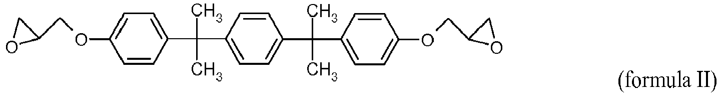

Particularly preferred epoxy compounds useful for the present invention are glycidyl ethers derived from Bisphenol A or Bisphenol F as well as glycidyl ethers derived from Phenol-Novolak-resins or cresol-Novolak-resins. A particular preferred epoxy compound useful for the present invention is Bisphenol A.

Cycloaliphatic epoxy compounds are for example hexahydro-o-phthalic acid-bis-glycidyl ester, hexahydro-m-phthalic acid-bis-glycidyl ester, hexahydro-p-phthalic acid-bis-glycidyl ester, 3,4-epoxycyclohexylmethyl-(3,4-epoxy)cyclohexane carboxylate or a mixture of these compounds. Also aliphatic epoxy compounds, for example 1,4-butane-diol diglycidylether, may be used as epoxy compound of the present invention.

Preferred epoxy compounds according to the present invention are also aromatic and/or cycloaliphatic epoxy compounds which contain at least one, preferably at least two, aminoglycidyl group in the molecule.

Preferred epoxy compounds according to the present invention are also aromatic and/or cycloaliphatic epoxy compounds which contain at least one, preferably at least two, aminoglycidyl group in the molecule. Particularly preferred epoxy compounds according to the present invention are those of formula (III):

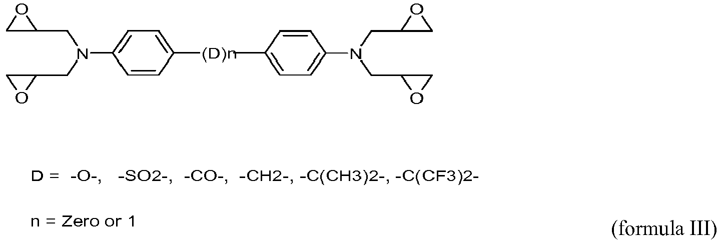

Especially suitable aminoglycidyl groups are N,N-diglycidylaniline, N,N-diglycidyltoluidine, N,N,N',N'-tetraglycidyl-1,3-diaminobenzene, N,N,N',N'-tetraglycidyl-1,4-diaminobenzene, N,N,N',N'-tetraglycidylxylylendiamine, N,N,N',N'-tetraglycidyl-4,4'-diaminodiphenylmethane, N,N,N',N'-tetraglycidyl-3,3'-diethyl-4,4'-diaminodiphenylmethane, N,N,N',N'-tetraglycidyl-3,3'-diaminodiphenylsulfone, N,N'-Dimethyl-N,N'-diglycidyl-4,4'-diaminodiphenylmethane, N,N,N',N'-tetraglycidyl-alfa,-alfa'-bis(4-aminophenyl)-p-diisopropylbenzene and N,N,N',N'-tetraglycidyl-alfa,alfa'-bis-(3,5-dimethyl-4-aminophenyl)-p-diisopropylbenzene.

Preferred epoxy compounds according to the present invention are also those of formula (IV): 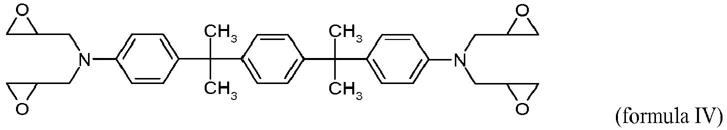 or of formula (V):

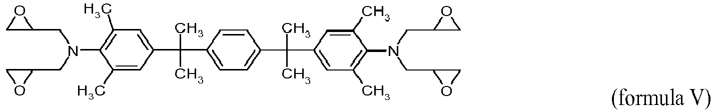

Preferably, the content of the epoxy compound in the epoxy resin composition is from 30 wt% to 80 wt%, preferably from 40 wt% to 70 wt%, more preferably from 50 wt% to 60 wt%, based on the total weight of the epoxy resin composition.

In addition to the epoxy compound, the epoxy resin composition according to the present invention also comprises at least one (dielectric) breakdown inhibiting agent. A "breakdown inhibiting agent" as used herein is a compound which reduces the damage to the epoxy resin composition when exposed to an electric field. The most common explanation for the working mechanism of breakdown inhibiting agents is based on the occurrence of an interaction between the "hot electron" and the excitation level of the breakdown inhibiting agent. The excitation energy of such breakdown inhibiting agent must be low enough to ensure that the energy from the "hot electron" is absorbed before it reaches the energy level where the avalanche like-decomposition process begins. As consequence, the breakdown inhibiting agent can suppress the electrical breakdown of the insulation. Ideally, the breakdown inhibiting agent is not chemically consumed, but instead regenerates into its ground stage by emitting energy in form of heat or radiation.

Without being bound to theory, it is believed that the interaction between the "hot electron" and the breakdown inhibiting agent is better in case the breakdown inhibiting agent is dissolved within the polymer matrix (instead of merely being dispersed therein). Another possible explanation is that the breakdown inhibiting agent is incorporated into the epoxy compound upon polymerization which leads to a highly balanced distribution of the breakdown inhibiting agent throughout the polymer matrix. Both mechanisms lead to a highly effective deactivation of the "hot electron" and finally to the prevention of the avalanche like-decomposition process within the epoxy resin composition.

For the purpose of this application, "at least one" breakdown inhibiting agent preferably means that one, two, three, four or five breakdown inhibiting agent(s) is/are present in the epoxy resin composition. In a preferred aspect, one breakdown inhibiting agent is present in the epoxy resin composition. In a further preferred aspect, two breakdown inhibiting agent are present in the epoxy resin composition.

In a preferred aspect, the breakdown inhibiting agent is dissolved in the epoxy resin composition. In other words, the at least one breakdown inhibiting agent is soluble and thus fully miscible in the epoxy resin composition. More specifically, the solubility of the at least one breakdown inhibiting agent in the epoxy resin composition is preferably greater than 0.01 mol/g, more preferably greater than 0.5 mol/g, most preferably greater than 0.1 mol/g at the mixing temperature. The solubility of the at least one breakdown inhibiting agent in the uncured epoxy resin composition is determined via visual inspection. In a specific aspect, the solubility of the at least one breakdown inhibiting agent in the uncured epoxy resin composition is preferably greater than 0.01 mol/g, more preferably greater than 0.5 mol/g, most preferably greater than 0.1 mol/g at the mixing temperature.

By contrast, although breakdown inhibiting agents are said to have a positive effect on the dielectric breakdown strength of thermoplastic materials like polyethylene, they do not dissolve in the thermoplastic material, and accordingly, they do not form a homogeneous mixture with the thermoplastic material. Instead, similar to fillers, they form a heterogeneous mixture with the thermoplastic material (e.g. a suspension) resulting in less interaction with the "hot electron" and similar problems fillers provoke (e.g. the formation of agglomerates leading to concentration gradients within the polymer matrix, a negative influence on the viscosity etc.)

In a further preferred aspect, the breakdown inhibiting agent has a low excitation energy, i.e. preferably smaller than 2 eV, more preferably smaller than 1.5 eV, most preferably smaller than 1 eV.

In a further preferred aspect, the breakdown inhibiting agent has a high ionization energy (potential), i.e. preferably higher than 5 eV, more preferably higher than 6 eV, most preferably higher than 7 eV.

In a preferred aspect, the at least one breakdown inhibiting agent is selected from the group consisting of polycyclic aromatic hydrocarbon, ketone, polyketone, sulfide, methacrylate and metallocene.

Preferred polycyclic aromatic hydrocarbons for use as breakdown inhibiting agents according to the present invention comprise 2 to 6 benzene rings, and preferably are those of the following formulae VIa and VIb: 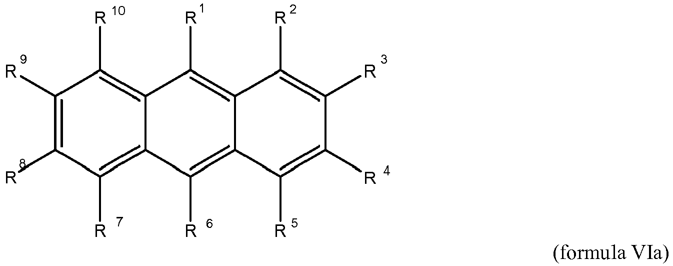 wherein R¹-R¹⁰ are the same or different. Each of R¹-R¹⁰ is selected from hydrogen, unsubstituted or substituted C₁-C₂₀ hydrocarbyl group, hydroxyl group, ester group, sulfoxid, sulfid, glycidyl group and halogen, such as chlorine. In a particular preferred aspect, each of R¹-R¹⁰ is hydrogen (i.e. formula VIa is Anthracene). In a further particular preferred aspect, R¹ and R⁶ are -COOH while R²-R⁵ and R⁷-R¹⁰ are hydrogen (i.e. formula VIa is 9,10-Anthracenedicarboxylic acid). In a further particular preferred aspect, R¹ is -NO₂ while R²-R¹⁰ are hydrogen (i.e. formula VIa is 9-Nitroanthracene). 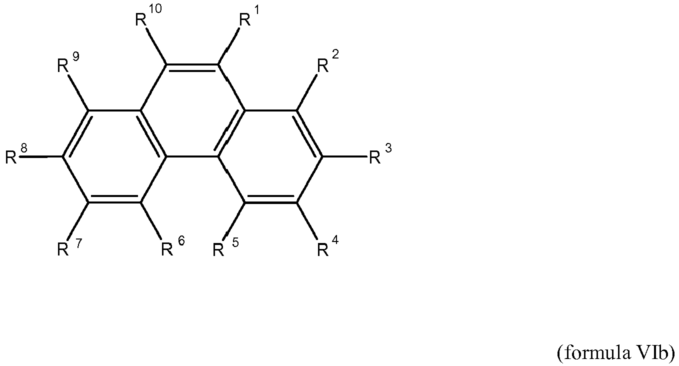 wherein R¹-R¹⁰ are the same or different. Each of R¹-R¹⁰ is selected from hydrogen, unsubstituted or substituted C₁-C₂₀ hydrocarbyl group, hydroxyl group, ester group, sulfoxid, sulfid, glycidyl group and halogen, such as chlorine. Preferably, each of R¹-R¹⁰ is hydrogen (i.e. formula VIb is Phenantrene).

Preferred ketones for use as breakdown inhibiting agents according to the present invention are aliphatic and/or aromatic ketones, preferably aromatic ketones such as phenones. Particularly preferred ketones are benzophenones having the following formula VII: 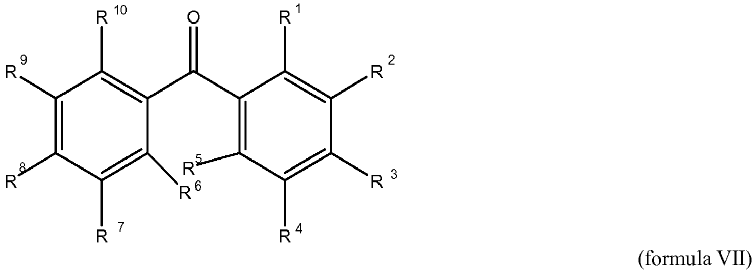 wherein R¹-R¹⁰ are the same or different. Each of R¹-R¹⁰ is selected from hydrogen, unsubstituted or substituted C₁-C₂₀ hydrocarbyl group, hydroxyl group, ester group, sulfoxid, sulfid, glycidyl group and halogen, such as chlorine. Preferably, R¹, R², R⁴-R⁷ and R⁹, R¹⁰ are hydrogen while R³ and R⁸ are hydroxyl (i.e. formula VII is Dihydroxybenzophenone).

Preferred polyketones for use as breakdown inhibiting agents according to the present invention are ketones having two or more ketone functional groups, preferably aliphatic and/or aromatic diketones. Particularly preferred diketones are those having the following formulae VIII to X: 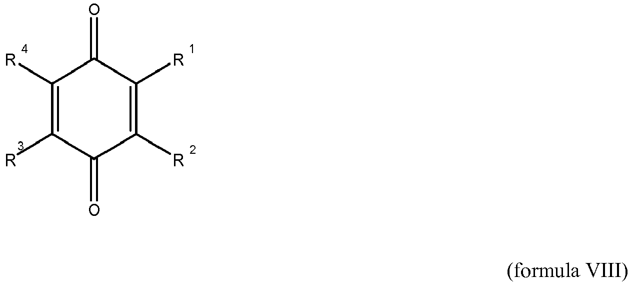 wherein R¹-R⁴ are the same or different. Each of R¹-R⁴ is selected from hydrogen, unsubstituted or substituted C₁-C₂₀ hydrocarbyl group, hydroxyl group, ester group, sulfoxid, sulfid, glycidyl group and halogen, such as chlorine. Preferably, R¹-R⁴ are hydrogen (i.e. formula VIII is p-Benzoquinone). 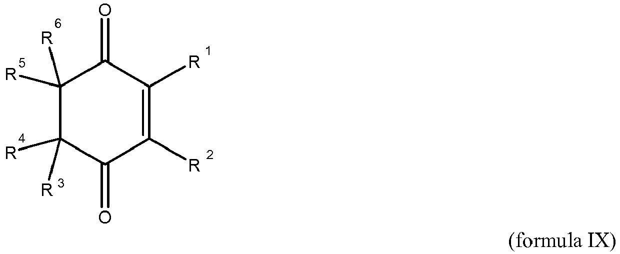 wherein R¹-R⁶ are the same or different. Each of R¹-R⁶ is selected from hydrogen, unsubstituted or substituted C₁-C₂₀ hydrocarbyl group, hydroxyl group, ester group, sulfoxid, sulfid, glycidyl group and halogen, such as chlorine. Most preferably, formula IX is 2,6,6-Trimethylcyclohex-2-ene-1,4-dione (TMCD).

R¹-C(=O)-(H₄C₂)-X-(C₂H₄)-C(=O)-R² (formula X)

wherein R¹ and R² are the same or different. In a particular preferred aspect, each of R¹ and R² is selected from unsubstituted or substituted C₁-C₂₀ hydrocarbyl group, while X is sulfur. Most preferably, formula X is Diaryl Thiodipropiate (DTDP). In an alternative particular preferred aspect, each of R¹ and R² is -O-R³ wherein R³ is selected from unsubstituted or substituted C₁-C₂₀ hydrocarbyl group and hydrogen. Most preferably, formula X is Diethyl 3,3'thiodipropionate.

Preferred sulfides for use as breakdown inhibiting agents according to the present invention are aliphatic and/or aromatic sulfides. Particularly preferred sulfides are those having the following formula XI:

R¹-S-R² (formula XI)

wherein R¹ and R² are the same or different. In a particular aspect, R¹ and R² are the same and are both -(C₂H₄)-(C=O)-R³ wherein R³ is selected from unsubstituted or substituted C₁-C₂₀ hydrocarbyl group and hydrogen. Most preferably, formula XI is Diaryl Thiodipropiate (DTDP). In an alternative particular aspect, R¹ and R² are the same and are both -(C₂H₄)-(C=O)-O-R³ wherein R³ is selected from an unsubstituted or substituted C₁-C₂₀ hydrocarbyl group and hydrogen. More preferably, formula XI is Diethyl 3,3'-thiodipropionate. Alternatively, R¹ and R² are the same and are both unsubstituted or substituted phenyl groups. If substituted, the number of substituents of both phenyl groups can vary between 1 and 5 and is preferably 1 or 3. Substituents are selected from hydrogen, alky group, hydroxyl group, ester group and glycidyl group. Most preferably, formula XI is 4,4'-Thiodiphenol or 2-tert-butyl-4-(5-tert-butyl-4-hydroxy-2-methylphenyl)sulfanyl-5-methylphenol (Santonox R).

Preferred methacrylates for use as breakdown inhibiting agents according to the present invention are those of the following formula XII: 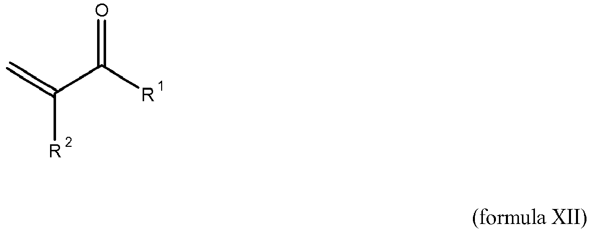 wherein R¹ is selected from unsubstituted or substituted C₁-C₂₀ hydrocarbyl group, ester group and glycidyl group and wherein R² is selected from unsubstituted or substituted C₁-C₂₀ hydrocarbyl group and H. Preferably, R¹ is -[OC₂H₄]ₙ-OH while R² is methyl, wherein n denotes a number from 1 to 40, preferably from 1 to 30, more preferably from 1 to 20. In a particular aspect, the methacrylates for use as breakdown inhibiting agents according to the present invention are Poly (ethylene glycol) methacrylate (PEGM). Preferably, the methacrylates have a molecular weight of 250 to 500 g/mol, more preferably 300 to 400 g/mol, most preferably 340 to 380 g/mol.

Preferred metallocenes for use as breakdown inhibiting agents according to the present invention are those of the following formula XIII: 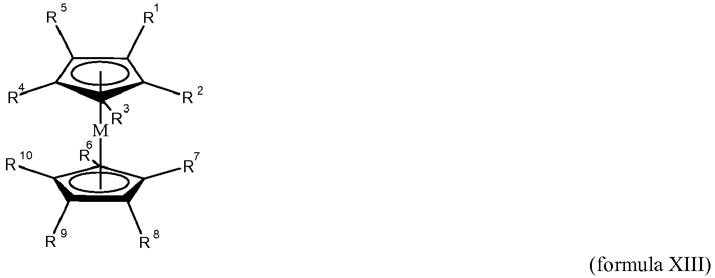 wherein R¹-R¹⁰ are the same or different. Each of R¹-R¹⁰ is selected from hydrogen, unsubstituted or substituted C₁-C₂₀ hydrocarbyl group, hydroxyl group, ester group, sulfoxid, sulfid, glycidyl group and halogen, such as chlorine and wherein M is a metal cation selected from the group consisting of Fe, Co, Cr, Ni, V, Zr, Mn, Mg, Ru, Rh, Ir. Most preferably, M is Fe while R¹-R¹⁰ are hydrogen.

Apparently, the above-mentioned groups of possible breakdown inhibiting agents (i.e. polycyclic aromatic hydrocarbon, ketone, polyketone, sulfide, methacrylate and metallocene) can have an overlap between each other. This means that one particular breakdown inhibiting agent can belong to more than one group of breakdown inhibiting agents. For instance, Diaryl Thiodipropiate (DTDP) belongs to the sulfides and, at the same time, to the diketones.

According to a preferred aspect, the content of the at least one breakdown inhibiting agent in the epoxy resin composition is from 0.5 wt% to 8 wt%, preferably from 1 wt% to 5 wt%, more preferably from 1.5 wt% to 3 wt% or from 3wt% to 5 wt%, based on the total weight of the epoxy resin composition. If the content of the at least one breakdown inhibiting agent exceeds 8 wt%, the positive influence on the electrical breakdown strength is negligible. If the content of the at least one breakdown inhibiting agent is lower than 0.5 wt%, there is no sufficient increase of the electrical breakdown strength.

According to a particular preferred aspect, the at least one breakdown inhibiting agent is selected from the group consisting of Anthracene, Anthracenedicarboxylic acid, 9-Nitroanthracene, Phenanthrene, 9,10 - Dihydroxybenzophenone, p-Benzoquinone, 2,6,6-Trimethylcyclohex-2-ene-1,4-dione (TMCD), Diaryl Thiodipropiate (DTDP), 4,4'-Thiodiphenol, 2-tert-butyl-4-(5-tert-butyl-4-hydroxy-2-methylphenyl)sulfanyl-5-methylphenol (Santonox R), Diethyl 3,3'-thiodipropionate, Poly (ethylene glycol) methacrylate (PEGM) and Ferrocene.

According to a specific aspect, the epoxy resin composition according to the present invention comprises one breakdown inhibiting agent which is 4,4'-Thiodiphenol. Preferably, the content of 4,4'-Thiodiphenol in the epoxy resin composition is from 3 wt% to 5 wt%, based on the total weight of the epoxy resin composition.

According to a specific aspect, the epoxy resin composition according to the present invention comprises one breakdown inhibiting agent which is p-Benzoquinone. Preferably, the content of p-Benzoquinone in the epoxy resin composition is from 3 wt% to 5 wt%, based on the total weight of the epoxy resin composition.

According to a specific aspect, the epoxy resin composition according to the present invention comprises one breakdown inhibiting agent which is Anthracene. Preferably, the content of Anthracene in the epoxy resin composition is from 1.5 wt% to 3 wt%, or alternatively from 3 wt% to 5 wt%, based on the total weight of the epoxy resin composition.

According to a specific aspect, the epoxy resin composition according to the present invention comprises one breakdown inhibiting agent which is TMCD. Preferably, the content of TMCD in the epoxy resin composition is from 3 wt% to 5 wt%, based on the total weight of the epoxy resin composition.

According to a specific aspect, the epoxy resin composition according to the present invention comprises two breakdown inhibiting agents which are Phenanthrene and Ferrocene. Preferably, the total content of Phenanthrene and Ferrocene in the epoxy resin composition is 1.5 wt% to 3 wt%, based on the total weight of the epoxy resin composition.

According to a specific aspect, the epoxy resin composition according to the present invention comprises two breakdown inhibiting agents which are Phenanthrene and PEGM. Preferably, the total content of Phenanthrene and PEGM in the epoxy resin composition is 1.5 wt% to 3 wt%, based on the total weight of the epoxy resin composition.

According to a specific aspect, the epoxy resin composition according to the present invention comprises two breakdown inhibiting agents which are TMCD and p-Benzoquinone. Preferably, the total content of TMCD and p-Benzoquinone in the epoxy resin composition is 1.5 wt% to 3 wt%, based on the total weight of the epoxy resin composition.

According to a specific aspect, the epoxy resin composition according to the present invention comprises two breakdown inhibiting agents which are 4,4'-Thiodiphenol and TMCD. Preferably, the total content of 4,4'-Thiodiphenol and TMCD in the epoxy resin composition is 1.5 wt% to 3 wt%, based on the total weight of the epoxy resin composition.

According to a specific aspect, the epoxy resin composition according to the present invention comprises two breakdown inhibiting agents which are Phenanthrene and TMCD. Preferably, the total content of Phenanthrene and TMCD in the epoxy resin composition is 1.5 wt% to 3 wt%, based on the total weight of the epoxy resin composition.

According to a preferred aspect, the epoxy resin composition according to the present invention further comprises one or more optional additives. These optional additives can be selected from the group consisting of filler material, curing accelerator, hardener and chain extender.

The filler material is preferably selected from silica, quartz, talc, silicates such as mica, kaolin or a layered silicate, aluminum oxide, aluminum trihydrate (ATH), titanium oxide, dolomite [CaMg(CO₃)₂], metal nitrides, such as silicon nitride, boron nitride and aluminium nitride or metal carbides, such as silicon carbide, and combinations thereof. The content of the filler material is preferably from 1 wt% to 80 wt%, more preferably from 5 wt% to 75 wt%, and most preferably from 10 wt% to 70 wt%, based on the total weight of the epoxy resin composition.

The curing accelerator is preferably selected from Amines, such as Benzyldimethylamin; Halogenated boron complexes such as Borontrifluoride or Borontrichloride; Imidazoles, such as p-Phenylimidazole, Methylimidazole, Ethylmethylimidazole; and combinations thereof. The content of the curing accelerator is preferably from 0.001 wt% to 10 wt%, more preferably from 0.01 wt% to 5 wt%, and most preferably from 0.015 wt% to 2 wt%, based on the total weight of the epoxy resin composition.

The hardener is preferably an anhydride hardener, preferably selected from Methyl Anhydride, methyltetrahydrophthalic anhydride, hexahydrophthalic anhydride and combinations thereof. The content of the hardener is preferably from 10 wt% to 50 wt%, more preferably from 15 wt% to 35 wt%, based on the total weight of the epoxy resin composition.

The chain extender is preferably selected from Bisphenol A, functionalized polyols (e.g. polyethylene or polypropylene glycols) and combinations thereof. The content of the chain extender is preferably from 5 wt% to 30 wt%, more preferably from 10 wt% to 25 wt%, and most preferably from 12 wt% to 20 wt%, based on the total weight of the epoxy resin composition.

According to a preferred aspect, the total content of all optional additive(s) is preferably less than 90 wt%, more preferably from 1 wt% to 45 wt%, more preferably from 10 wt% to 40 wt%, based on the total weight of the epoxy resin composition.

According to an embodiment, the invention also relates to a method for producing an epoxy resin composition (as described herein) comprising the step of dissolving at least one breakdown inhibiting agent (as described herein), optionally together with one or more additives (as described herein), in an epoxy compound (as described herein).

According to an aspect, dissolving the at least one breakdown inhibiting agent (together with one or more optional additives) in the epoxy compound is carried out at 20°C to 150°C, more preferably at 30°C to 130°C, most preferably at 40°C to 120°C.

According to a preferred aspect, dissolving the at least one breakdown inhibiting agent together with one or more optional additives in the epoxy compound is carried out under vacuum, preferably under 1-4 mbar.

According to a further preferred aspect, the at least one breakdown inhibiting agent is mixed together with all additives separately from the epoxy compound. Mixing together of the at least one breakdown inhibiting agent and the additive(s) is preferably carried out at 20°C to 150°C, more preferably at 70°C to 140°C, most preferably at 80°C to 130°C to obtain a breakdown inhibiting agent/additive mixture. The epoxy compound is preferably preheated separately from the breakdown inhibiting agent/additive mixture at 30°C to 90°C, more preferably at 40°C to 80°C, most preferably at 50°C to 70°C, and added to the breakdown inhibiting agent/additive mixture. The formulation obtained is then mixed together at 20°C to 150°C, more preferably at 30°C to 130°C, most preferably at 40°C to 120°C under vacuum, preferably under 1-4 mbar.

The method according to the present invention further comprises a step of curing the formulation. The step of curing preferably comprises a step of pre-curing and a step of post-curing. Pre-curing is preferably carried out for 5 to 15h, more preferably for 8-12h at 100°C to 140°C, more preferably at 130°c to 150°C. Post-curing is preferably carried out for 5 to 15h, more preferably for 8-12h at 120°C to 160°C, more preferably at 130°C to 150°C.

According to an embodiment, the invention further relates to the use of at least one breakdown inhibiting agent (as described herein) for increasing the breakdown strength of an insulator comprising an epoxy resin composition.

According to an embodiment, the invention also relates to the use of the epoxy resin composition (as described herein) for impregnating electrical coils and in the production of electrical components, preferably transformers, bushings, insulators, switches, sensors, converters and cable end seals.

Preferred uses of the epoxy composition according to the present invention are also in medium- high-voltage insulations for indoor and outdoor use, e. g. insulators for gas insulated switch gear, support insulators, current and voltage transformers and sensors, bushings, as impregnating resins, for outdoor insulators associated with high-voltage lines, in long-rods, in composite and cap-type insulators, and also in base insulators in the medium-voltage sector, in the production of insulators associated with outdoor power switches, in measuring transducers, in lead-throughs, and in overvoltage protectors, in switchgear constructions, in power switches, dry-type transformers, and electrical machines, in coating materials for transistors and other semiconductor elements and/or to impregnate electrical components.

According to an embodiment, the invention further relates to an insulation material for electrical articles comprising the epoxy resin composition (as described herein).

Preferred insulation materials according to the present invention are insulators, particularly electrical insulations, especially for impregnating electrical coils and in the production of electrical components such as transformers, bushings, insulators, switches, sensors, converters and cable end seals.

According to an embodiment, the invention further relates to electrical articles comprising the epoxy resin composition (as described herein).

The present invention shall be described in more detail in the following Examples.

### EXAMPLES

### 1. Preparation of Epoxy Resin Compositions

In Table 1 below, the components for preparing an exemplary anhydride cured epoxy resin composition are shown (in the following referred to as "epoxy composition").

**Table 1: Components used for casting the anhydride cured epoxy composition.**

| **Compound** | **Content** |
|---|---|
| Bisphenol A based epoxy resin | 100 phr |
| Curing accelerator | < 10 phr |
| Anhydride hardener | 15 to 35 phr |

For preparing the epoxy composition, the curing accelerator (<10 phr) was dissolved in the anhydride hardener (15 to 35 phr) at 95 °C. The epoxy compound (100 phr) was preheated separately to 60°C and added to the hardener mixture, after all solid components were dissolved. The formulation was then mixed at 60°C under vacuum of 1-4 mbar until it became bubble-free. For curing, the formulation was put for 10h at 120°C and then post-cured at 140°C for 10h. For preparing samples containing voltage stabilizers, the breakdown inhibiting agents were added and dissolved in the hardener, as outlined above.

### 2. Sample Preparation and Geometry

Steel plates (15*15 cm) with 2 mm thick spacers were used for producing the samples for electric breakdown testing. Prior to assembly, both plates and spacers were treated with release agent, Release QZ13, from Huntsman. Then, the molds were preheated in an oven to 70 °C and the resin was poured into the cavities of the mold. Afterwards, the resin containing mold was degassed at 60 °C at 30 mbar for 15min and then cured according the above mentioned curing schedule. After cure, samples of the dimensions 50x50x2mm were cut out of the obtained plates and then cleaned in an ultrasonic bath with Isopropanol for 15 minutes. After drying with pressurize air the samples were kept in plastic bags until usage.

### 3. Measuring Method

A Baur Oil Tester "DTA 100 C" was used for testing of the materials (AC). The sample was immersed into the oil (Nytro 10XN) containing glass vessel of the device, and clamped between the electrodes (see Figure 1). The first measurement was performed five minutes after filling the vessel with oil and one minute after placing the sample in the device. This is to enable bubbles raising to the surfaces, which were formed during filling the vessel with oil and by placing the samples. The detailed parameters used for the measurements can be seen in Table 2 below.

**Table 2: Applied settings for measuring the electric breakdown strength with Baur Oil Tester DTA 100 C.**

| **Parameter** | **Remark** |
|---|---|
| Device | Baur Oil Tester DTA 100 C |
| Electrodes | Spherical |
| Ramp speed | 2 kV/s |
| Oil | Nytro 10XN (degassed and dried at 1-4 mbar overnight at 60°C) |
| Sample size | 50*50*2 mm |

### 4. Data Evaluation

The data from the electrical breakdown strength measurements were evaluated with Weibull statistics, using the White fit method. For the Weibull calculations, 10 - 15 data points of each materials formulation were used.

The thereof obtained scale parameter, α, is given in kV/mm and represents the electrical breakdown strength, corresponding to 63.2 % of probability that the tested material grade has failed.

### 5. Results

In the following tables, the calculated scale parameters α for the electric breakdown strength for different epoxy samples are compared. All of them consist of the base formulation as listed in Table 1 (including the indicated mixing ratio). In addition, the samples contain a small amount (1 wt%-6 wt%) of different breakdown inhibiting agents. As a benchmark for the comparison, the α value of the breakdown inhibiting agent free epoxy sample was used, labelled with "reference".

### a) Effect by adding one single breakdown inhibiting agent to the epoxy mixture

In Table 3 below there is shown the scale parameters α of different samples containing the breakdown inhibiting agents in a concentration of 2 w%. For a better overview, the relative improvement in relation to the reference sample (% [α]) is shown as well.

The results express, that a significant improvement of the electrical breakdown probability by +16 to +18% can be achieved, by adding one breakdown inhibiting agent.

**Table 3: Scale parameters α, as a measure for the dielectric breakdown strength for the epoxy composition (Reference), and for epoxy compositions comprising a breakdown inhibiting agent in a concentration of 2 wt%.**

| **Composition** | **α [kV/mm]** | **% [α]** |
|---|---|---|
| Reference | 29.0 | - |
| Epoxy composition with Anthracene 2 wt% | 34.3 | +18 |
| Epoxy composition with TMCD 2 wt% | 33.9 | +17 |
| Epoxy composition with Phenanthrene 2 wt% | 33.5 | +16 |

In Table 4 below the data from above are supplemented with the electric breakdown values for samples with a concentration of 4 w% of breakdown inhibiting agent. One can see that for most of the breakdown inhibiting agent no further improvement is achieved. The only exception is 4,4'-Thiodiphenol, where a further improvement to +25% can be realized.

**Table 4: Scale parameters, α, for formulations with a concentration of 2 wt% and 4 wt% of breakdown inhibiting agent, respectively. For 4,4'-Thiodiphenol also results from testing of 6 wt% is included.**

| **Composition** | **α [kV/mm]** | **% [α]** |
|---|---|---|
| Reference | 29.0 | - |
| Epoxy composition with Anthracene 2 wt% | 34.3 | +18 |
| Epoxy composition with Anthracene 4 wt% | 34.5 | +18 |
| Epoxy composition with Phenanthrene 2 wt% | 33.5 | +16 |
| Epoxy composition with Phenanthrene 4 wt% | 33.2 | +15 |
| Epoxy composition with 4,4'-Thiodiphenol 2 wt% | 33.2 | +15 |
| Epoxy composition with 4,4'-Thiodiphenol 4 wt% | 36.4 | +25 |

### b) Effect of Combining Breakdown inhibiting agents

In an additional series of experiments, the effect on the electrical breakdown strength by combining of two voltage stabilizers was evaluated. For that case, samples were investigated, that contain two different breakdown inhibiting agents, with 1 w% of each (in total 2w% of breakdown inhibiting agent). Some results are shown in Table 5 below. It becomes apparent, that there is a strong improvement by combining phenanthrene with ferrocene: In comparison to the effect of the single breakdown inhibiting agents (see values on the right side of the table), a synergetic effect is clearly observed. For the other combinations of breakdown inhibiting agents, there is also some improvement, however the absolute improvement is lower.

**Table 5: Results from electrical breakdown measurements for combinations of different breakdown inhibiting agents. On the right side of the table, the values for the corresponding single breakdown inhibiting agents are shown in order to outline the synergetic effect of combining the breakdown inhibiting agent.**

| | | | **Breakdown inhibiting agent (1) alone 2w%** | **Breakdown inhibiting agent (2) alone 2w%** |
|---|---|---|---|---|
| **Composition** | **α [kV/mm]** | **Δα [%]** | **Δα [%]** | **Δα [%]** |
| Reference | 29.0 | - | - | - |
| Epoxy composition with Phenanthrene(1)/Ferr ocene (2) in total 2 wt% | 38.2 | +32 | +16 | +14 |
| Epoxy composition with Phenanthrene(1) PEGM (2) in total 2 wt% | 34.5 | +19 | +16 | +9 |
| Epoxy composition with TMCD(1)/p-benzoquinone(2) in total 2 wt% | 34.5 | +19 | +17 | +10 |

In the following, the comprehensive data of the evaluation of different voltage stabilizers (Table 6 - Table 8) are shown.

**Table 6: Scale parameters α, as a measure for the dielectric breakdown strength for the reference system and for formulations with different additives, all in a concentration of 2 wt%.**

| **Composition** | **α [kV/mm]** | **% [α]** |
|---|---|---|
| Reference | 29.0 | - |
| Anthracene 2 wt% | 34.3 | +18 |
| TMCD 2 wt% | 33.9 | +17 |
| Phenanthrene 2 wt% | 33.5 | +16 |
| 4,4'-Thiodiphenol 2 wt% | 33.2 | +15 |
| Ferrocene 2 wt% | 33.1 | +15 |
| p-benzoquinone 2 wt% | 31.8 | +10 |
| PEGM 2 wt% | 31.3 | +8 |
| 9-nitroanthracene 2 wt% | 31.1 | +7 |

**Table 7: Scale parameters α, for formulations with a concentration of 2 wt% and 4 wt% of additives, respectively. For 4,4'-Thiodiphenol also results from testing of 6 wt% is included.**

| **Composition** | **α [kV/mm]** | **% [α]** |
|---|---|---|
| Reference | 29.0 | - |
| Anthracene 2 wt% | 34.3 | +18 |
| Anthracene 4 wt% | 34.5 | +18 |
| TMCD 2 wt% | 33.9 | +17 |
| TMCD 4 wt% | 30.4 | +5 |
| Phenanthrene 2 wt% | 33.5 | +16 |
| Phenanthrene 4 wt% | 33.2 | +15 |
| 4,4'-Thiodiphenol 2 wt% | 33.2 | +15 |
| **4,4'-Thiodiphenol 4 wt%** | **36.4** | **+25** |
| 4,4'-Thiodiphenol 6 wt% | 32.8 | +13 |
| Ferrocene 2 wt% | 33.1 | +14 |
| Ferrocene 4 wt% | 28.6 | -1 |
| p-benzoquinone 2 wt% | 31.8 | +10 |
| p-benzoquinone 4 wt% | 34.7 | +20 |
| PEGM 2 wt% | 31.3 | +9 |
| PEGM 4 wt% | 33.3 | +15 |
| 9-nitroanthracene 2 wt% | 31.1 | +7 |
| 9-nitroanthracene 4 wt% | 30.8 | +6 |

**Table 8: Results from electrical breakdown measurements for combinations of different additives.**

| **Composition** | **α [kV/mm]** | **% [α]** |
|---|---|---|
| Reference | 29.0 | - |
| Phenanthrene/Ferrocene 2 wt% | 38.2 | +32 |
| Phenanthrene/PEGM 2 wt% | 34.5 | +19 |
| TMCD/p-benzoquinone 2 wt% | 34.5 | +19 |
| 4,4'-Thiodiphenol/TMCD 2 wt% | 34.1 | +18 |
| Phenanthrene/TMCD 2 wt% | 34.0 | +17 |
| p-benzoquinone/PEGM 2 wt% | 32.4 | +12 |
| Phenanthrene/p-benzoquinone 2 wt% | 32.2 | +11 |
| 4,4'-Thiodiphenol/Phenanthrene 2 wt% | 32.2 | +11 |
| p-benzoquinone/Ferrocene | 31.9 | +10 |
| TMCD/Ferrocene 2 wt% | 31.7 | +9 |
| 4,4'-Thiodiphenol/Ferrocene 2wt% | 31.3 | +8 |
| 4,4'-Thiodiphenol/p-benzoquinone 2 wt% | 31.1 | +7 |
| TMCD/PEGM 2 wt% | 30.2 | +4 |
| 4,4'-Thiodiphenol/PEGM 2 wt% | 30.0 | +4 |

## Claims

1. Epoxy resin composition for use as insulator, comprising
- an epoxy compound,
- at least one breakdown inhibiting agent.

2. Epoxy resin composition according to claim 1, wherein the at least one breakdown inhibiting agent is dissolved in the epoxy resin composition.

3. Epoxy resin composition according to claim 2, wherein the solubility of the at least one breakdown inhibiting agent in the epoxy resin composition is greater than 0.01 mol/l.

4. Epoxy resin composition according to any one of the preceding claims, wherein the at least one breakdown inhibiting agent is selected from the group consisting of polycyclic aromatic hydrocarbon, ketone, polyketone, sulfide, methacrylate and metallocene.

5. Epoxy resin composition according to claim 4, wherein the at least one breakdown inhibiting agents is selected from the group consisting of Anthracene, Anthracenedicarboxylic acid, 9-Nitroanthracene, Phenanthrene, 9,10 - Dihydroxybenzophenone, p-Benzoquinone, 2,6,6-Trimethylcyclohex-2-ene-1,4-dione (TMCD), Diaryl Thiodipropiate (DTDP), 4,4'-Thiodiphenol, 2-tert-butyl-4-(5-tert-butyl-4-hydroxy-2-methylphenyl)sulfanyl-5-methylphenol (Santonox R), Diethyl 3,3'-thiodipropionate, Poly (ethylene glycol) methacrylate (PEGM) and Ferrocene.

6. Epoxy resin composition according to any one of the preceding claims, wherein the content of the at least one breakdown inhibiting agent in the epoxy resin composition is from 0.5 wt% to 8 wt%, preferably from 1 wt% to 5 wt%, more preferably from 1.5 wt% to 3 wt%, based on the total weight of the epoxy resin composition.

7. Epoxy resin composition according to any one of the preceding claims, wherein two breakdown inhibiting agents are present in the composition, which preferably are Phenanthrene and Ferrocene.

8. Epoxy resin composition according to any one of the preceding claims, wherein the epoxy resin composition further comprises one or more optional additives selected from filler material, curing accelerator, hardener, chain extender, preferably in a content of less than 90 wt%, based on the total weight of the epoxy resin composition.

9. Epoxy resin composition according to any one of the preceding claims, wherein the epoxy resin composition comprises from 30 wt% to 80 wt% of the epoxy compound, from 0.5 wt% to 8 wt% of the at least one breakdown inhibiting agent, from 0.001 wt% to 10 wt% of one or more curing accelerator(s), from 10 wt% to 50 wt% of one or more hardener(s), and from 5 wt% to 30 wt% of one or more chain extender(s), based on the total weight of the epoxy resin composition.

10. Epoxy resin composition according to any one of claims 1-9, wherein the epoxy resin composition is in a cured state and shows no phase separation occurrence determined via visual inspection, polarized microscopy, atomic force microscopy (AFM) and scanning electron microscopy (SEM) or a combination of one or more of these techniques.

11. Method for producing an epoxy resin composition, comprising the step of dissolving at least one breakdown inhibiting agent optionally together with one or more additives in an epoxy compound, preferably carried out at 20°C to 150°C under vacuum.

12. Use of at least one breakdown inhibiting agent for increasing the breakdown strength of an insulator comprising an epoxy resin composition.

13. Use of the epoxy resin composition as defined in any one of claims 1-9 for impregnating electrical coils and in the production of electrical components, preferably transformers, bushings, insulators, switches, sensors, converters and cable end seals.

14. Insulation material for electrical articles comprising the epoxy resin composition according to any one of claims 1-10.

15. Electrical article comprising an epoxy resin composition according to any one of claims 1-10.
